# EUROPEAN PATENT APPLICATION

(11) **EP 3 989 047 A1**
(43) Date of publication of application: **27.04.2022**
(21) Application number: 20853218.4
(22) Date of filing: 15.07.2020
(51) Int. Cl.: G06F 3/0481, G10L 15/22

(54) **METHOD FOR VOICE CONTROLLING APPARATUS, AND ELECTRONIC APPARATUS**

(30) Priority: 09.08.2019 CN 201910735931; 09.04.2020 CN 202010273843
(71) Applicant: Huawei Technologies Co., Ltd., Longgang Shenzhen, Guangdong 518129 (CN)
(72) Inventor: WU, Youguo, Shenzhen, Guangdong 518129 (CN); ZHANG, Guicheng, Shenzhen, Guangdong 518129 (CN); YANG, Junyuan, Shenzhen, Guangdong 518129 (CN); JIN, Weiming, Shenzhen, Guangdong 518129 (CN); CHEN, Minjiang, Shenzhen, Guangdong 518129 (CN)
(74) Representative: Isarpatent
(86) International application number: PCT/CN2020/102113
(87) International publication number: WO 2021/027476

(57) **Abstract**

A method for control a device using a voice and an electronic device are provided and applied to the field of artificial intelligence. The method for controlling a device using a voice includes: obtaining a voice instruction of a user, where the voice instruction is used to indicate a target instruction (901); obtaining user interface information of a current user interface, where the current user interface is a user interface currently displayed by a client device (902); and determining the target instruction corresponding to the voice instruction, where the target instruction is obtained by using the voice instruction and the user interface information (903). This manner helps improve voice recognition efficiency.

## Description

This application claims priority to Chinese Patent Application No. 201910735931.9, filed with the China National Intellectual Property Administration on August 9, 2019 and entitled "INTERFACE CONTROL METHOD AND DEVICE", which is incorporated herein by reference in its entirety.

This application claims priority to Chinese Patent Application No. 202010273843.4, filed with the China National Intellectual Property Administration on April 9, 2020 and entitled "METHOD FOR CONTROLLING A DEVICE USING A VOICE AND ELECTRONIC DEVICE", which is incorporated herein by reference in its entirety.

### TECHNICAL FIELD

This application relates to the field of artificial intelligence and the field of electronic devices, and more specifically, to a method for controlling a device using a voice and an electronic device.

### BACKGROUND

A user may watch a live TV broadcast, an on-line video resource, and a local video resource, listen to an on-line audio resource and a local audio resource, and the like by using a large-screen display apparatus. Before the user watches a video or listens to music, the user may say, based on a user interface displayed by the large-screen display apparatus, a video or audio resource that the user wants to play. The large-screen display apparatus or a set-top box connected to the large-screen display apparatus may capture and respond to the voice of the user.

To ensure accuracy and efficiency of voice recognition, a file used for voice recognition is generally configured for the large-screen display apparatus. The voice recognition file may be used to identify a voice instruction for invoking a data resource configured on the large-screen display apparatus. To obtain relatively good user experience, data resources displayed or played on the large-screen display apparatus need to be frequently updated. For example, the large-screen display apparatus may play a newly released TV series. Accordingly, a large amount of work is required to update the voice recognition file on the large-screen display apparatus. This may reduce voice recognition efficiency.

This application provides a method for controlling a device using a voice and an electronic device, to improve voice recognition efficiency.

According to a first aspect, a method for controlling a device using a voice is provided, including: obtaining a voice instruction of a user, where the voice instruction is used to indicate a target instruction; obtaining user interface information of a current user interface, where the current user interface is a user interface currently displayed by a client device; and determining the target instruction corresponding to the voice instruction, where the target instruction is obtained by using the voice instruction and the user interface information.

Optionally, the method for controlling a device using a voice may be implemented by the client device (which may also be referred to as a terminal device) or a server (which may also be referred to as a network device).

Optionally, the method for controlling a device using a voice may be completed by a voice assistant on the client device.

The user interface information may include various types of information indicating the current user interface.

In this application, compared with data resources that can be displayed and played by the client device, information content on the current user interface is less, and time for obtaining the user interface information may be shorter. In addition, when displaying the user interface information, the client device may also obtain at least a part of the user interface information. In this way, efficiency of obtaining the user interface information may be higher. Then, when the displayed user interface of the client device is updated, the user interface information may further be updated, and an update manner is relatively simple. When the current user interface is updated, because the client device has learned of at least a part of user interface information of the updated user interface when displaying the updated user interface, update of the current user interface generally has relatively little impact on voice recognition efficiency. In addition, the user interface information may reflect information that can be observed by the user on the current user interface, and the voice instruction of the user is recognized with reference to the user interface information. This helps improve an accuracy rate of voice recognition.

With reference to the first aspect, in some implementations of the first aspect, the user interface information includes at least one of the following information: an icon name, hot word information, indication information of a control instruction, or target corner mark information of the current user interface.

Icons may be classified into menu icons, resource collection icons, function icons, and the like.

In this application, the user interface information may reflect content on the user interface from a plurality of perspectives, to help the user control the client device in a plurality of manners.

With reference to the first aspect, in some implementations of the first aspect, the target corner mark information corresponds to a target icon or a target control instruction.

Optionally, the user interface information further includes a correspondence between the target corner mark information and the target icon.

Optionally, the user interface information further includes a correspondence between the target corner mark information and a target collection.

Optionally, the user interface information further includes a correspondence between the target corner mark information and the target control instruction.

In this application, a corner mark is displayed on the current user interface, to help increase a quantity of recognizable voice instructions and improve the accuracy rate of voice recognition. For example, when the user cannot describe a pattern in language, the user may relatively quickly express a voice instruction based on information reflected by the corner mark.

With reference to the first aspect, in some implementations of the first aspect, the obtaining a voice instruction of a user includes: receiving the voice instruction sent by the client device; the obtaining user interface information of a current user interface includes: receiving the user interface information sent by the client device; and the determining the target instruction corresponding to the voice instruction includes: determining the target instruction based on the voice instruction and the user interface information.

For example, the server may implement a voice recognition operation by using an automatic speech recognition (automatic speech recognition, ASR) module and a natural language understanding (natural language understanding, NLU) module. Optionally, the server or the client device may further include a dialog state tracking (dialog state tracking, DST) module, a dialog management (dialog management, DM) module, a natural language generation (natural language generation, NLG) module, a text to speech (text to speech, TTS) module, and the like, to implement the voice recognition operation.

In this application, after obtaining the user interface information, the server may recognize, with reference to content currently displayed on the client, the voice instruction made by the user. This helps the server eliminate useless voice recognition data, and relatively quickly and accurately convert the voice instruction of the user into the corresponding target instruction.

With reference to the first aspect, in some implementations of the first aspect, the method further includes: sending the target instruction to the client device.

In this application, the server recognizes the voice instruction and transmits data through a communications network, so that a requirement on a processing capability of the client device can be lowered. For example, the client device may not have a voice recognition capability, or a processor speed and a memory capacity of the client device may be relatively common.

With reference to the first aspect, in some implementations of the first aspect, the determining the target instruction corresponding to the voice instruction includes: The client device determines the target instruction based on the voice instruction and the user interface information.

In this application, the client device may have the voice recognition capability. Because the user interface information reduces an amount of reference data for voice recognition, a voice recognition effect of the client device can be improved.

With reference to the first aspect, in some implementations of the first aspect, before the determining the target instruction corresponding to the voice instruction, the method further includes: sending the user interface information and the voice instruction to the server. The determining the target instruction corresponding to the voice instruction includes: receiving the target instruction sent by the server, where the target instruction is determined by the server based on the user interface information and the voice instruction of the user.

In this application, after obtaining the user interface information, the server may recognize, with reference to content currently displayed on the client, the voice instruction made by the user. This helps the server eliminate useless voice recognition data, and relatively quickly and accurately convert the voice instruction of the user into the corresponding target instruction. In addition, the server recognizes the voice instruction and transmits data through a communications network, so that a requirement on a processing capability of the client device can be lowered. For example, the client device may not have a voice recognition capability, or a processor speed and a memory capacity of the client device may be relatively common.

With reference to the first aspect, in some implementations of the first aspect, before the obtaining user interface information of a current user interface, the method further includes: sending first indication information to a foreground application, where the first indication information is used to indicate the foreground application to feed back the user interface information. The obtaining user interface information of a current user interface includes: receiving the user interface information sent by the foreground application, where the user interface information is obtained by the foreground application by retrieving information related to the current user interface.

The foreground application may be, for example, a video playing application, an audio playing application, a desktop application, a setting application, a live TV application, or a radio application.

The retrieving may also be interpreted as searching, scanning, or the like.

A manner in which the foreground application determines the user interface information may be: searching for a document used to display the current user interface, to obtain the user interface information. The document may include, for example, a hypertext markup language (hypertext markup language, HTML) file, an extensible markup language (extensible markup language, XML) file, and a script file.

A manner in which the foreground application determines the user interface information may be: scanning an element of the current user interface, to obtain the user interface information based on the element. The element may include an icon, collection information corresponding to the icon, a control instruction corresponding to the current user interface, or the like.

In this application, an identifier of the foreground application may associate a voice instruction, a current user interface currently displayed by the foreground application, and a target instruction used to control the foreground application, so that the user can control a plurality of foreground applications by using the voice instruction. This is relatively more flexible.

With reference to the first aspect, in some implementations of the first aspect, the user interface information further includes the identifier of the foreground application.

In this application, the voice assistant may learn, based on the user interface information, that the current user interface is provided by the foreground application, to further control, by using the target instruction corresponding to the voice instruction, the foreground application to perform, based on the current user interface, an operation corresponding to the target instruction.

With reference to the first aspect, in some implementations of the first aspect, the target instruction further includes the identifier of the foreground application.

In this application, the voice assistant may learn, based on the target instruction, that the target instruction is used to instruct the foreground application to perform a target operation, so that the foreground application can perform an operation used to meet a user expectation.

With reference to the first aspect, in some implementations of the first aspect, the user interface information includes the target corner mark information. Before the obtaining a voice instruction of a user, the method further includes: displaying a corner mark on the current user interface. After the obtaining a voice instruction of a user, the method further includes: removing the corner mark on the current user interface.

In this application, displaying the corner mark may provide more optional voice instruction manners for the user, and the displayed corner mark is removed at a proper time, so that the user interface has a relatively simple display effect.

According to a second aspect, an electronic device is provided, including: an obtaining module, configured to obtain a voice instruction of a user, where the voice instruction is used to indicate a target instruction, the obtaining module is further configured to obtain user interface information of a current user interface, and the current user interface is a user interface currently displayed by a client device; and a processing module, configured to determine the target instruction corresponding to the voice instruction, where the target instruction is obtained by using the voice instruction and the user interface information.

With reference to the second aspect, in some implementations of the second aspect, the user interface information includes at least one of the following information: an icon name, hot word information, indication information of a control instruction, or target corner mark information of the current user interface.

With reference to the second aspect, in some implementations of the second aspect, the target corner mark information corresponds to a target icon or a target control instruction.

With reference to the second aspect, in some implementations of the second aspect, the electronic device is a server. The obtaining module is specifically configured to receive the voice instruction sent by the client device. The obtaining module is specifically configured to receive the user interface information sent by the client device. The processing module is specifically configured to determine the target instruction based on the voice instruction and the user interface information.

With reference to the second aspect, in some implementations of the second aspect, the server further includes a transceiver module configured to send the target instruction to the client device.

With reference to the second aspect, in some implementations of the second aspect, the electronic device is the client device. The processing module is specifically configured to determine the target instruction based on the voice instruction and the user interface information.

With reference to the second aspect, in some implementations of the second aspect, the electronic device is the client device. The client device further includes a transceiver module, configured to: before the processing module determines the target instruction corresponding to the voice instruction, send the user interface information and the voice instruction to a server. The processing module is specifically configured to receive the target instruction sent by the server, where the target instruction is determined by the server based on the user interface information and the voice instruction of the user.

With reference to the second aspect, in some implementations of the second aspect, the electronic device further includes a sending module, configured to: before the obtaining module obtains the user interface information of the current user interface, send first indication information to a foreground application, where the first indication information is used to indicate the foreground application to feed back the user interface information. The obtaining module is specifically configured to receive the user interface information sent by the foreground application, where the user interface information is obtained by the foreground application by retrieving information related to the current user interface.

With reference to the second aspect, in some implementations of the second aspect, the user interface information further includes an identifier of the foreground application.

With reference to the second aspect, in some implementations of the second aspect, the target instruction further includes the identifier of the foreground application.

With reference to the second aspect, in some implementations of the second aspect, the user interface information includes the target corner mark information. The processing module is further configured to: before the obtaining module obtains the voice instruction of the user, display a corner mark on the current user interface. The processing module is further configured to: after the obtaining module obtains the voice instruction of the user, remove the corner mark on the current user interface.

According to a third aspect, an electronic device is provided, including a processor configured to obtain a voice instruction of a user, where the voice instruction is used to indicate a target instruction. The processor is further configured to obtain user interface information of a current user interface, where the current user interface is a user interface currently displayed by a client device. The processor is further configured to determine the target instruction corresponding to the voice instruction, where the target instruction is obtained by using the voice instruction and the user interface information.

With reference to the third aspect, in some implementations of the third aspect, the user interface information includes at least one of the following information: an icon name, hot word information, indication information of a control instruction, or target corner mark information of the current user interface.

With reference to the third aspect, in some implementations of the third aspect, the target corner mark information corresponds to a target icon or a target control instruction.

With reference to the third aspect, in some implementations of the third aspect, the electronic device is a server. The processor is specifically configured to receive the voice instruction sent by the client device. The processor is specifically configured to receive the user interface information sent by the client device. The processor is specifically configured to determine the target instruction based on the voice instruction and the user interface information.

With reference to the third aspect, in some implementations of the third aspect, the electronic device further includes a transceiver configured to send the target instruction to the client device.

With reference to the third aspect, in some implementations of the third aspect, the electronic device is the client device. The processor is specifically configured to determine the target instruction based on the voice instruction and the user interface information.

With reference to the third aspect, in some implementations of the third aspect, the electronic device is the client device. The client device further includes a transceiver, configured to: before the processor determines the target instruction corresponding to the voice instruction, send the user interface information and the voice instruction to a server. The processor is specifically configured to receive the target instruction sent by the server, where the target instruction is determined by the server based on the user interface information and the voice instruction of the user.

With reference to the third aspect, in some implementations of the third aspect, the electronic device further includes a transceiver, configured to: before the processor obtains the user interface information of the current user interface, send first indication information to a foreground application, where the first indication information is used to indicate the foreground application to feed back the user interface information. The processor is specifically configured to receive the user interface information sent by the foreground application, where the user interface information is obtained by the foreground application by retrieving information related to the current user interface.

With reference to the third aspect, in some implementations of the third aspect, the user interface information further includes an identifier of the foreground application.

With reference to the third aspect, in some implementations of the third aspect, the target instruction further includes the identifier of the foreground application.

With reference to the third aspect, in some implementations of the third aspect, the user interface information includes the target corner mark information. The processor is further configured to: before the processor obtains the voice instruction of the user, display a corner mark on the current user interface. The processor is further configured to: after the processor obtains the voice instruction of the user, remove the corner mark on the current user interface.

According to a fourth aspect, this technical solution provides an electronic device, including one or more processors, a memory, a plurality of applications, and one or more computer programs. The one or more computer programs are stored in the memory. The one or more computer programs include instructions. When the instructions are executed by the electronic device, the electronic device is enabled to perform the method in any implementation of the first aspect.

According to a fifth aspect, the technical solution provides an electronic device, including one or more processors and one or more memories. The one or more memories are coupled to the one or more processors. The one or more memories are configured to store computer program code, and the computer program code includes computer instructions. When the one or more processors execute the computer instructions, the electronic device is enabled to perform the method in any implementation of the first aspect.

According to a sixth aspect, a communications apparatus is provided. The apparatus includes a processor, a memory, and a transceiver. The memory is configured to store a computer program, and the processor is configured to execute the computer program stored in the memory, so that the apparatus is enabled to perform the method in any possible implementation of the first aspect.

According to a seventh aspect, a communications apparatus is provided. The communications apparatus includes at least one processor and a communications interface. The communications interface is used by the communications apparatus to exchange information with another communications apparatus. When program instructions are executed in the at least one processor, the communications apparatus is enabled to implement the method in any possible implementation of the first aspect.

According to an eighth aspect, this technical solution provides a non-volatile computer-readable storage medium, including computer instructions. When the computer instructions are run on an electronic device, the electronic device is enabled to perform the method in any implementation of the first aspect.

According to a ninth aspect, this technical solution provides a computer program product. When the computer program product runs on an electronic device, the electronic device is enabled to perform the method in any implementation of the first aspect.

According to a tenth aspect, a chip is provided. The chip includes a processor and a data interface. The processor reads, through the data interface, instructions stored in a memory, to perform the method in any implementation of the first aspect.

Optionally, in an implementation, the chip may further include the memory. The memory stores the instructions. The processor is configured to execute the instructions stored in the memory. When the instructions are executed, the processor is configured to perform the method in any implementation of the first aspect.

### BRIEF DESCRIPTION OF DRAWINGS

FIG. 1 is a schematic diagram of a hardware structure of an electronic device according to an embodiment of this application;
FIG. 2 is a schematic diagram of a software structure of an electronic device according to an embodiment of this application;
FIG. 3 is a schematic diagram of a user interface according to an embodiment of this application;
FIG. 4 is a schematic flowchart of a method for controlling a device using a voice according to an embodiment of this application;
FIG. 5 is a schematic flowchart of a method for controlling a device using a voice according to an embodiment of this application;
FIG. 6 is a schematic diagram of a user interface according to an embodiment of this application;
FIG. 7 is a schematic interaction diagram of a voice recognition module according to an embodiment of this application.
FIG. 8A and FIG. 8B are a schematic flowchart of a method for controlling a device using a voice according to an embodiment of this application;
FIG. 9 is a schematic flowchart of a method for controlling a device using a voice according to an embodiment of this application; and
FIG. 10 is a schematic block diagram of an electronic device according to an embodiment of this application.

### DESCRIPTION OF EMBODIMENTS

The following describes technical solutions of this application with reference to accompanying drawings.

Terms used in the following embodiments are merely intended to describe specific embodiments, but are not intended to limit this application. Terms "one", "a", "the", "the foregoing", and "this" of singular forms used in this specification and the appended claims of this application are also intended to include plural forms such as "one or more", unless otherwise specified in the context clearly. It should be further understood that, in the following embodiments of this application, "at least one" or "one or more" means one, two, or more. The term "and/or" is used to describe an association between associated objects and represents that three relationships may exist. For example, A and/or B may represent the following three cases: Only A exists, both A and B exist, and only B exists, where A and B may be singular or plural. The character "/" usually represents an "or" relationship between the associated objects.

Reference to "an embodiment", "some embodiments", or the like described in this specification indicates that one or more embodiments of this application include a specific feature, structure, or characteristic described with reference to the embodiments. Therefore, in this specification, statements, such as "in an embodiment", "in some embodiments", "in some other embodiments", and "in other embodiments", that appear at different places do not necessarily mean referring to a same embodiment, instead, they mean "one or more but not all of the embodiments", unless otherwise specifically emphasized. The terms "include", "comprise", "have", and their variants all mean "include but are not limited to", unless otherwise specifically emphasized.

The following describes an electronic device provided in the embodiments of this application, a user interface for such an electronic device, and embodiments for using such an electronic device. In some embodiments, the electronic device may be a portable electronic device, for example, a mobile phone, a tablet computer, or a video player that further includes other functions such as a personal digital assistant and/or a music player. An example embodiment of a portable electronic device includes but is not limited to a portable electronic device using iOS^{®}, Android^{®}, Microsoft^{®}, or another operating system. The portable electronic device may alternatively be another portable electronic device, such as a laptop (Laptop). It should be further understood that, in some other embodiments, the electronic device may alternatively be a desktop computer, a television, a notebook computer, a projection device, a set-top box, or the like, but not a portable electronic device.

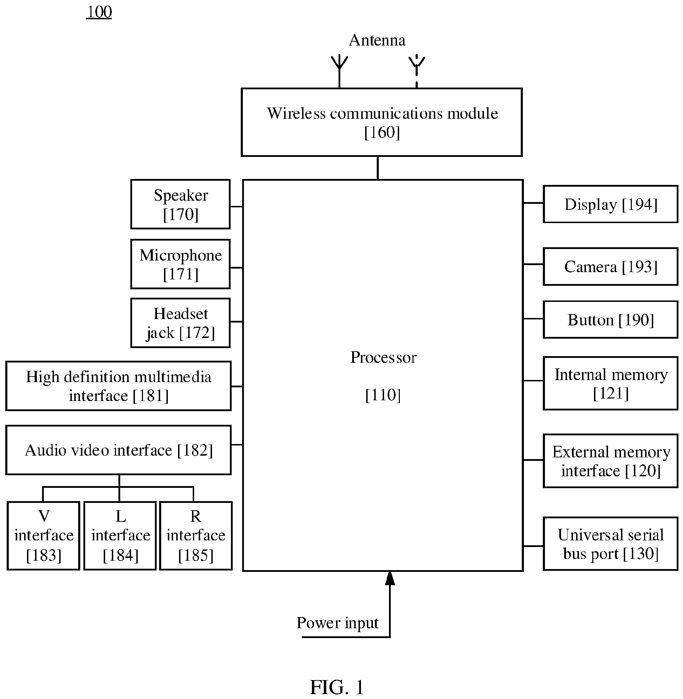

For example, FIG. 1 is a schematic diagram of a structure of an electronic device 100. The electronic device 100 may include a processor 110, an external memory interface 120, an internal memory 121, a universal serial bus (universal serial bus, USB) port 130, an antenna, a wireless communications module 160, a speaker 170, a microphone 171, a headset jack 172, a high definition multimedia interface (high definition multimedia interface, HDMI) 181, an audio video (audio video, AV) interface 182, a button 190, a camera 193, a display 194, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or there may be a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors. In some embodiments, the electronic device 101 may alternatively include one or more processors 110. The controller may generate an operation control signal based on instruction operation code and a time sequence signal, to complete control of instruction reading and instruction execution. In some other embodiments, a memory may further be disposed in the processor 110, to store instructions and data. For example, the memory in the processor 110 may be a cache memory. The memory may store instructions or data just used or cyclically used by the processor 110. If the processor 110 needs to use the instructions or the data again, the processor 110 may directly invoke the instructions or the data from the memory, In this way, repeated access is avoided, waiting time of the processor 110 is reduced, and efficiency of processing data or executing instructions by the electronic device 101 is improved.

In some embodiments, the processor 110 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a general-purpose input/output (general-purpose input/output, GPIO) interface, a USB port, and/or the like. The USB port 130 is an interface that conforms to a USB standard specification, and may be specifically a mini USB port, a micro USB port, a USB Type-C port, or the like. The USB port 130 may be configured to connect to a charger to charge the electronic device 101, or may be configured to transmit data between the electronic device 101 and a peripheral device. The USB port 130 may alternatively be configured to connect to a headset, and play audio by using the headset.

It may be understood that an interface connection relationship between the modules illustrated in this embodiment of this application is merely an example for description, and does not constitute a limitation on the structure of the electronic device 100. In some other embodiments of this application, the electronic device 100 may alternatively use an interface connection manner different from that in the foregoing embodiment, or a combination of a plurality of interface connection manners.

A wireless communication function of the electronic device 100 may be implemented through the antenna, the wireless communications module 160, the modem processor, the baseband processor, and the like.

The antenna may be configured to transmit and receive electromagnetic wave signals. Each antenna in the electronic device 100 may be configured to cover one or more communications frequency bands. Different antennas may further be multiplexed, to improve antenna utilization. In some other embodiments, the antenna may be used in combination with a tuning switch.

The wireless communications module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communications module 160 may be one or more components integrating at least one communications processor module. The wireless communications module 160 receives an electromagnetic wave by an antenna 2, performs frequency modulation and filtering processing on an electromagnetic wave signal, and sends a processed signal to the processor 110. The wireless communications module 160 may further receive a to-be-sent signal from the processor 110, perform frequency modulation and amplification on the signal, and convert a processed signal into an electromagnetic wave through the antenna 2 for radiation.

The electronic device 100 implements a display function through the GPU, the display 194, the application processor, and the like. The GPU is a microprocessor for image processing, and is connected to the display 194 and the application processor. The GPU is configured to perform: mathematical and geometric calculation, and render an image. The processor 110 may include one or more GPUs that execute program instructions to generate or change display information.

The display 194 is configured to display an image, a video, and the like. The display 194 includes a display panel. A liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, quantum dot light emitting diodes (quantum dot light emitting diodes, QLED), or the like may be used for the display panel. In some embodiments, the electronic device 100 may include one or more displays 194.

The display 194 of the electronic device 100 may be a flexible screen. Currently, the flexible screen attracts much attention due to unique features and huge potential of the flexible screen. Compared with a conventional screen, the flexible screen has features of strong flexibility and bendability, and can provide a user with a new interaction mode based on the feature of bendability, to meet more requirements of the user for an electronic device. For an electronic device configured with a foldable display, the foldable display on the electronic device may be switched between a small screen in a folded form and a large screen in an expanded form at any time. Therefore, the user uses a split-screen function more frequently on the electronic device configured with the foldable display.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. The photosensitive element of the camera converts an optical signal into an electrical signal, and transmits the electrical signal to the ISP for processing. The ISP converts the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into a standard image signal in an RGB format, a YUV format, or the like. In some embodiments, the electronic device 100 may include one or more cameras 193.

The digital signal processor is configured to process a digital signal, and may process another digital signal in addition to the digital image signal. For example, when the electronic device 100 selects a frequency, the digital signal processor is configured to perform Fourier transform on frequency energy, or the like.

The video codec is configured to compress or decompress a digital video. The electronic device 100 may support one or more video codecs. In this way, the electronic device 100 can play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. With reference to a structure of a biological neural network, for example, with reference to a transfer mode between neurons of a human brain, the NPU quickly processes input information, and can further continuously perform self-learning. Applications such as intelligent cognition of the electronic device 100 may be implemented through the NPU, for example, image recognition, facial recognition, voice recognition, and text understanding.

The external memory interface 120 may be configured to connect to an external memory card such as a micro SD card, to extend a storage capability of the electronic device 100. The external memory card communicates with the processor 110 through the external memory interface 120, to implement a data storage function. For example, files such as music and a video are stored in the external memory card.

The internal memory 121 may be configured to store one or more computer programs, and the one or more computer programs include instructions. The processor 110 may run the instructions stored in the internal memory 121, so that the electronic device 101 performs a screen-off display method provided in some embodiments of this application, various applications, data processing, and the like. The internal memory 121 may include a program storage area and a data storage area. The program storage area may store an operating system. The program storage area may further store one or more applications (for example, Gallery and Contacts), and the like. The data storage area may store data (for example, a photo and a contact) created during use of the electronic device 101, and the like. In addition, the internal memory 121 may include a high-speed random access memory, or may include a non-volatile memory, for example, one or more magnetic disk storage devices, flash memory devices, or universal flash storage (universal flash storage, UFS). In some embodiments, the processor 110 may run the instructions stored in the internal memory 121 and/or the instructions stored in the memory that is disposed in the processor 110, so that the electronic device 101 performs the screen-off display method provided in the embodiments of this application, other applications, and data processing.

The electronic device 100 may implement an audio function, for example, music playing and recording, through the speaker 170, the microphone 171, the headset jack 172, the application processor, and the like.

The button 190 includes a power button, a volume button, and the like. The button 190 may be a mechanical button or a touch button. The electronic device 100 may receive a key input, and generate a key signal input related to user settings and function control of the electronic device 100.

The electronic device 100 may receive data through the high definition multimedia interface (high definition multimedia interface, HDMI) 181, and implement display functions such as a split-screen (which may also be referred to as an extended screen) function or a video playing function through the display 194, the speaker 170, and the headset jack 172.

The electronic device 100 may receive video resource data through the audio video (audio video, AV) interface 182, and implement the display functions such as the split-screen function or the video playing function through the display 194, the speaker 170, and the headset jack 172. The AV interface 182 may include a V (video) interface 183, an L (left) interface 184, and an R (right) interface 185. The V interface 183 may be configured to input a mixed video signal. The L interface 184 may be configured to input a left-channel sound signal. The R interface 185 may be configured to input a right-channel sound signal.

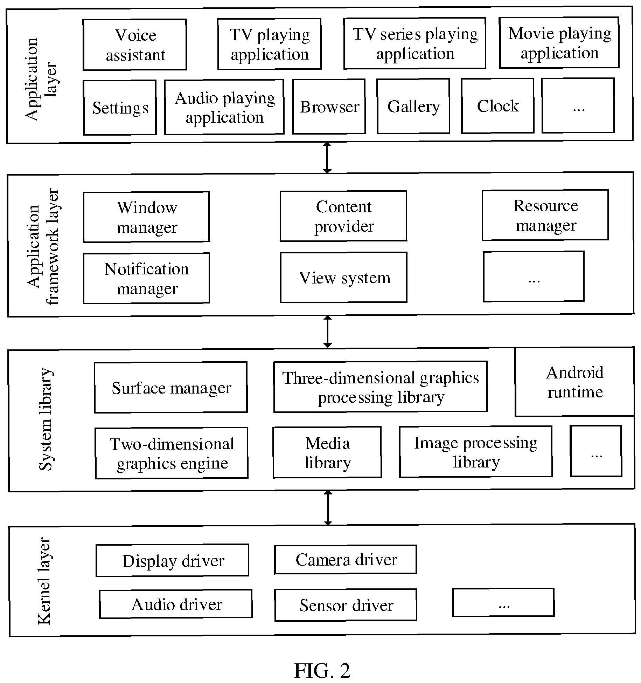

FIG. 2 is a block diagram of a software structure of the electronic device 100 according to an embodiment of this application. In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom. The application layer may include a series of application packages.

As shown in FIG. 2, the application packages may include applications such as a voice assistant, a TV playing application, a TV series playing application, a movie playing application, an audio playing application, Gallery, Browser, Clock, and Settings.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to store and obtain data, and enable the data to be accessed by an application. The data may include a video, an image, audio, a browsing history, a bookmark, and the like.

The view system includes visual controls, such as a control for displaying a text and a control for displaying an image. The view system may be configured to construct an application. A display interface may include one or more views. For example, a TV series playing interface may include a text display view, an image display view, and a video display view.

The resource manager provides various resources for an application, such as a localized character string, an icon, a picture, a layout file, and a video file.

The notification manager enables an application to display notification information in the status bar, and may be used to transmit a notification-type message. The displayed information may automatically disappear after a short pause without user interaction. For example, the notification manager is configured to notify download completion, give a message notification, and the like. The notification manager may alternatively be a notification that appears in a top status bar of the system in a form of a graph or a scroll bar text, for example, a notification of an application program running on a background or a notification that appears on the interface in a form of a dialog window. For example, text information is prompted in the status bar or a prompt tone is produced.

The Android runtime includes a kernel library and a virtual machine. The Android runtime is responsible for scheduling and management of the Android system.

The kernel library includes two parts: a function that needs to be invoked in Java language and a kernel library of Android.

The application layer and the application framework layer are run on the virtual machine. The virtual machine executes Java files of the application layer and the application framework layer as binary files. The virtual machine is configured to perform functions such as object lifecycle management, stack management, thread management, security and exception management, and garbage collection.

The system library may include a plurality of function modules, such as a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording of a plurality of commonly used audio and video formats, static image files, and the like. The media library may support a plurality of audio and video coding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The voice assistant in the application packages may be a system-level application. The voice assistant may also be referred to as a human-machine interaction robot, a human-machine conversation robot, a chatbot (ChatBOT), or the like. The voice assistant application may further be referred to as a smart assistant application or the like. Currently, the voice assistant is widely used in various electronic devices such as a mobile phone, a tablet computer, a smart speaker, and a smart TV, and provides the user with an intelligent voice interaction mode. The voice assistant is one of the cores of human-machine interaction.

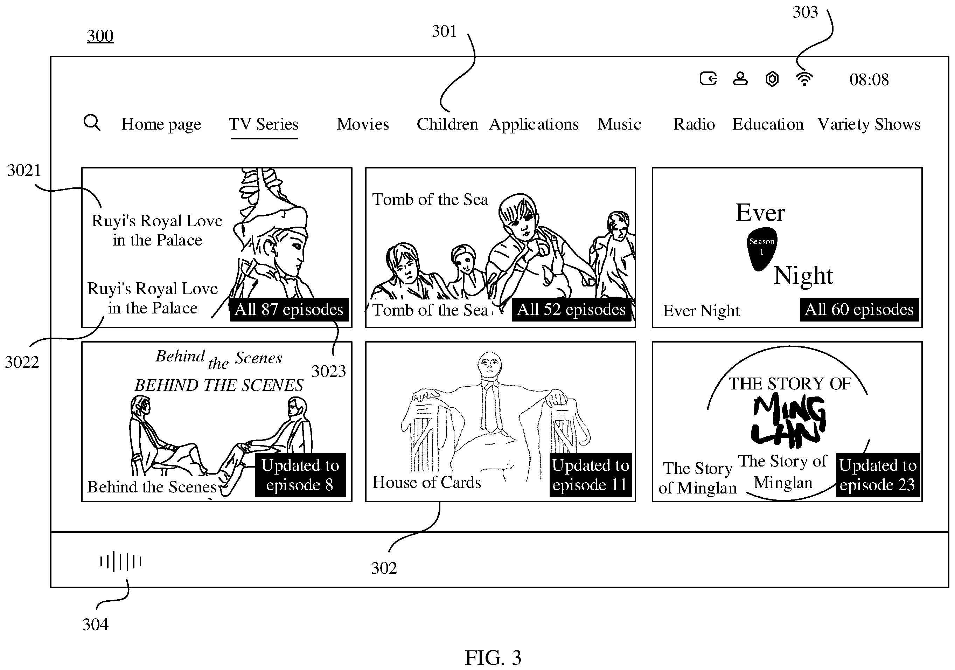

FIG. 3 is a schematic diagram of a user interface of an electronic device 100. The electronic device 100 may be the electronic device 100 shown in FIG. 1. For example, the electronic device 100 may be a large-screen display apparatus such as a television or a projection device. A plurality of icons may be displayed on the user interface. For example, the user interface may include a plurality of menu icons 301, a plurality of resource collection icons 302, and a plurality of function icons 303. It may be understood that the user interface shown in this embodiment of this application does not constitute a specific limitation on a user interface 300. In some other embodiments of this application, the user interface 300 may include more or fewer icons than those shown in the figure, or some icons may be combined, or some icons may be split, or there may be a different icon layout.

On the user interface shown in FIG. 3, the plurality of menu icons 301 may include: a "home page" icon, a "TV series" icon, a "movies" icon, a "children" icon, an "applications" icon, a "music" icon, a "radio" icon, an "education" icon, a "variety shows" icon, and the like. It should be understood that the electronic device 100 may further provide more menu icons 301 for the user. However, because a size of the user interface is limited, the user interface may display some of all menu icons 301. For example, the user may select the menu icon 301 by using an infrared remote control or a voice.

In an example, the user selects the "home page" icon, and the electronic device 100 may display the plurality of resource collection icons 302. Types of the plurality of resource collections may include a TV series collection, a movie collection, a collection for children, an application collection, a music collection, a radio collection, an education collection, a variety show collection, and the like. For example, the electronic device 100 may display icons of three currently most popular TV series collections and icons of three currently most popular movie collections.

In an example, the user selects the "TV series" icon. As shown in FIG. 3, the electronic device 100 may display icons of a plurality of TV series collections. For example, the electronic device 100 may display icons of three currently most popular TV series collections and icons of three relatively popular TV series collections that are being updated. As shown in FIG. 3, the three currently most popular TV series collections may include "Ruyi's Royal Love in the Palace", "Tomb of the Sea", and "Ever Night". The three relatively popular TV series collections that are being updated may include "Behind the Scenes", "House of Cards", and "The Story of Minglan". Optionally, the icon of each TV series collection may include a schematic diagram 3021 of the TV series collection (for example, a still of the TV series), a name 3022 of the TV series collection (for example, a name of the TV series), and a quantity 3023 of episodes of the TV series collection (for example, a quantity of latest episodes of the TV series). If the TV series collection is completely updated, "total X episodes" may be displayed (for example, "all 87 episodes" is displayed on the icon corresponding to "Ruyi's Royal Love in the Palace" in FIG. 3). If the TV series collection is not updated completely, "updated to episode Y" may be displayed (for example, "updated to episode 8" is displayed on the icon corresponding to "Behind the Scenes" in FIG. 3).

In an example, the user selects the "movies" icon, and the electronic device 100 may display icons of a plurality of movie collections. For example, the electronic device 100 may display icons of three currently most popular movie collections and icons of three movie collections that are just released.

In an example, the user selects the "children" icon, and the electronic device 100 may display icons of a plurality of collections for children. For example, the electronic device 100 may display icons of three currently most popular programs for children and icons of three cartoons that are just most popular among children.

In an example, the user selects the "applications" icon, and the electronic device 100 may display icons of a plurality of applications. For example, the electronic device 100 may display icons of three applications most recently used by the user, and icons of three most frequently used applications.

In an example, the user selects the "music" icon, and the electronic device 100 may display icons of a plurality of music collections. For example, the electronic device 100 may display icons of three music albums that are just released and icons of three new favorite music playlists of the user.

In an example, the user selects the "radio" icon, and the electronic device 100 may display icons of a plurality of radio collections. For example, the electronic device 100 may display icons of three currently most popular radio programs and icons of three new favorite radio programs of the user.

In an example, the user selects the "education" icon, and the electronic device 100 may display icons of a plurality of education collections. For example, the electronic device 100 may display icons of three currently most popular education collections and icons of three education collections most recently played by the user.

In an example, the user selects the "variety shows" icon, and the electronic device 100 may display icons of a plurality of variety show collections. For example, the electronic device 100 may display icons of three currently most popular variety show collections and icons of three variety show collections most recently played by the user.

The plurality of function icons 303 on the user interface may include a back icon, a user information icon, a settings icon, a wireless connection icon, a clock icon, and the like. The user may return to an upper-level user interface by selecting the back icon. The user may view information about a user account logged in to the electronic device 100 by selecting the user information icon. The user may enter a setting interface and adjust a parameter of the electronic device 100 by selecting the settings icon. The user may use a wireless connection function of the electronic device 100 by selecting the wireless connection icon, for example, search for an available wireless network around the electronic device 100, and access the available wireless network. The user may view the clock icon to learn a current time. The user may set a clock parameter of the electronic device 100 by selecting the clock icon.

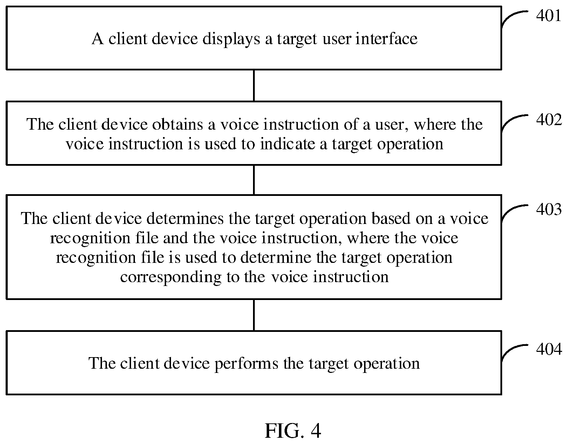

FIG. 4 shows a method for controlling a device using voice. In the method shown in FIG. 4, a client device may be the electronic device 100 shown in FIG. 1.

401: The client device displays a current user interface.

For example, the current user interface displayed by the client device may be the user interface 300 shown in FIG. 3.

402: The client device obtains a voice instruction of a user, where the voice instruction is used to indicate a target operation.

The user may say the voice instruction, for example, "play episode 30 of Ruyi's Royal Love in the Palace". To be specific, after observing the current user interface, the user selects the TV series collection "Ruyi's Royal Love in the Palace" on the current user interface, and selects to watch the 30^{th} episode video resource in the "Ruyi's Royal Love in the Palace" collection. The voice instruction may be used to instruct the client device to play the 30^{th} episode video resource in the TV series collection "Ruyi's Royal Love in the Palace".

Optionally, step 402 may be completed by a voice assistant on the client device.

Optionally, the user may say a wake-up word, to wake up the client device to capture the voice instruction of the user.

Optionally, as shown in 304 in FIG. 3, in a process of capturing the voice instruction of the user, the client device may display prompt information on the current user interface, to prompt the user that a voice recognition function of the client device is being used.

403: The client device determines the target operation based on a voice recognition file and the voice instruction, where the voice recognition file is used to determine the target operation corresponding to the voice instruction.

Step 403 may be completed by the voice assistant on the client device.

The voice recognition file may include a plurality of types of information used to determine the target operation. Therefore, the client device may determine the operation corresponding to the voice instruction. For example, the voice recognition file may include data used to determine that the voice instruction is a video playing instruction. For another example, the voice recognition file may include data used to determine that the voice instruction is an application download instruction.

For example, the client device may implement a voice recognition operation by using an automatic speech recognition (automatic speech recognition, ASR) module and a natural language understanding (natural language understanding, NLU) module.

404: The client device performs the target operation.

To be specific, the client device may perform the target operation in response to the voice instruction sent by the user.

In conclusion, the client device may recognize a voice of the user based on the voice recognition file. Content such as a data resource library and a user interface needs to be frequently updated, to obtain good user experience. In addition, the voice recognition file further needs to be updated, so that the user can conveniently use the voice instruction. Therefore, a large amount of work is required to update the voice recognition file. In addition, a data amount of a voice package is usually relatively large, and is not conducive to voice recognition efficiency.

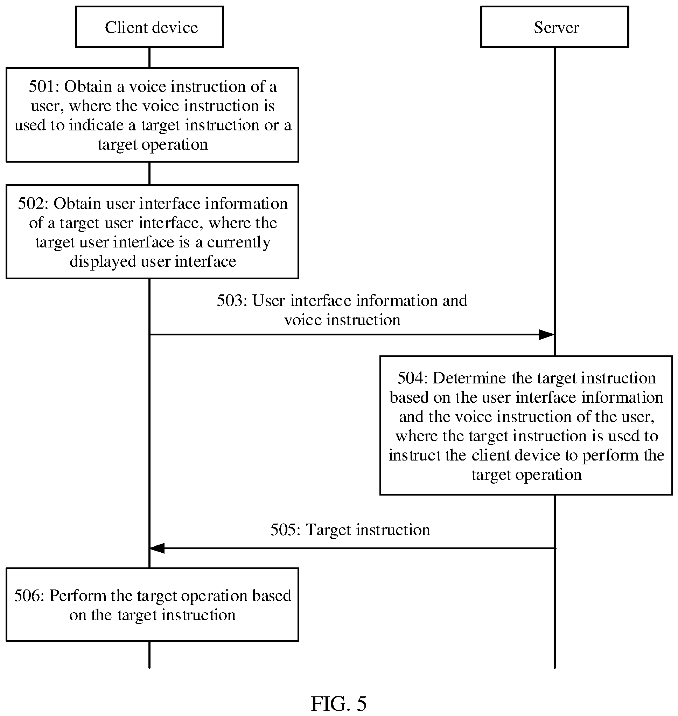

FIG. 5 shows a method for controlling a device using a voice according to an embodiment of this application. In the method shown in FIG. 4, a client device may be the electronic device 100 shown in FIG. 1.

501: The client device obtains a voice instruction of a user, where the voice instruction is used to indicate a target instruction or a target operation.

Optionally, step 501 may be completed by a voice assistant on the client device.

Optionally, the user may say a wake-up word, to wake up the client device to capture the voice instruction of the user.

The target instruction may be, for example, text content of the voice instruction.

The target operation may be, for example, a response operation indicated by the target instruction.

In an example, the user may say a voice instruction, for example, "play episode 30 of Ruyi's Royal Love in the Palace". To be specific, after observing a user interface displayed by the client device, the user may select a TV series collection "Ruyi's Royal Love in the Palace" on the user interface, and select to watch the 30^{th} episode video resource in the "Ruyi's Royal Love in the Palace" collection. The voice instruction may be used to instruct the client device to play the 30^{th} episode video resource in the TV series collection "Ruyi's Royal Love in the Palace".

In an example, the user may say a voice instruction, for example, "display a movie page". To be specific, after observing a user interface displayed by the client device, the user may select a movie collection on the user interface, to continue to browse a movie resource in the movie collection. The voice instruction may be used to instruct the client device to display a user interface corresponding to the movie collection.

In an example, the user may say a voice instruction, for example, "enable Wi-Fi (namely, wireless fidelity (wireless fidelity))." To be specific, after observing a user interface displayed by the client device, the user may select a wireless connection icon on the user interface, and set a wireless connection parameter of the client device. The voice instruction may be used to instruct the client device to start a wireless connection module.

In an example, the user may say a voice instruction, for example, "the third". To be specific, after observing a user interface displayed by the client device, the user may select an icon or a control instruction corresponding to a corner mark 3. The voice instruction may be used to instruct the client device to perform an operation corresponding to the corner mark 3.

In an example, the user may say a voice instruction, for example, "next page". To be specific, after observing a user interface displayed by the client device, the user may control the client device to perform a page turning operation, so that the user may continue to browse a next page of the user interface. The voice instruction may be used to instruct the client device to display the next page of the user interface.

Optionally, as shown in 304 in FIG. 3, in a process of capturing the voice instruction of the user, the client device may display prompt information on the current user interface, to prompt the user that a voice recognition function of the client device is being used.

502: The client device obtains user interface information of a current user interface, where the current user interface is a user interface currently displayed by the client device.

The current user interface may be the user interface observed by the user in step 501. The current user interface may be, for example, the user interface 300 shown in FIG. 3. The user interface information may include various types of information indicating the current user interface.

Optionally, step 502 may be completed by a voice assistant on the client device.

Optionally, execution sequences of steps 501 and 502 may be reversed. For example, step 501 is performed before step 502. Alternatively, step 502 is performed before step 501.

Optionally, the user interface information includes at least one of the following information: an icon name, hot word information, indication information of a control instruction, or target corner mark information of the current user interface.

In an example, the user interface information may include an icon name of the current user interface.

The user interface 300 shown in FIG. 3 is used as an example. The user interface 300 may include a "home page" icon, a "TV series" icon, a "movies" icon, a "children" icon, an "applications" icon, a "music" icon, a "radio" icon, an "education" icon, a "variety shows" icon, a "Ruyi's Royal Love in the Palace" collection icon, a "Tomb of the Sea" collection icon, an "Ever Night" collection icon, a "Behind the Scenes" collection icon, a "House of Cards" collection icon, a "The Story of Minglan" collection icon, a back icon, a user information icon, a settings icon, a wireless connection icon, a clock icon, and the like. In this case, user interface information corresponding to the user interface 300 may include: a home page, TV series, movies, children, applications, music, radio, education, variety shows, Ruyi's Royal Love in the Palace, Tomb of the Sea, Ever Night, Behind the Scenes, House of Cards, The Story of Minglan, back, user information, settings, a wireless connection, a clock, and the like. It should be understood that the collection may be a collection of data resources. For example, the "Ruyi's Royal Love in the Palace" collection may be a resource collection including all TV series videos of the "Ruyi's Royal Love in the Palace" collection.

In an example, the user interface information includes hot word information.

For example, "children" is referred to as "kids", or the like. In other words, "children" may correspond to the hot word "kids". Therefore, the hot word information included in the user interface information corresponding to the user interface 300 may include "kids".

For another example, "music" is referred to as "song". In other words, "music" may correspond to the hot word "song". Therefore, the hot word information included in the user interface information corresponding to the user interface 300 may include "song".

For another example, "radio" is referred to as "broadcast". In other words, "radio" may correspond to the hot word "broadcast". Therefore, the hot word information included in the user interface information corresponding to the user interface 300 may include "broadcast".

For example, "Ruyi's Royal Love in the Palace" is often referred to as "Ruyi" or the like for short. In other words, "Ruyi's Royal Love in the Palace" may correspond to the hot word "Ruyi". Therefore, the hot word information included in the user interface information corresponding to the user interface 300 may include "Ruyi".

For example, "The Story of Minglan" is often referred to as "Zhifou", "Minglan", or the like for short. In other words, "The Story of Minglan" may correspond to the hot word "Zhifou" and the hot word "Minglan". Therefore, the hot word information included in the user interface information corresponding to the user interface 300 may include "Zhifou" and "Minglan".

For example, "Marvel's The Avengers" is often referred to as "The Avengers", "Avengers", or the like for short. In other words, "Marvel's The Avengers" may correspond to the hot word "The Avengers" and the hot word "Avengers". Therefore, when the current user interface includes a "Marvel's The Avengers" collection icon, the hot word information included in the user interface information may include "The Avengers" and "Avengers".

For another example, "user information" is often referred to as "account", "login information", or the like. In other words, "user information" may correspond to the hot word "account", the hot word "login information", or the like. Therefore, the hot word information included in the user interface information corresponding to the user interface 300 may include "account" and "login information".

For another example, functions of a "wireless connection" application may include connecting to wireless fidelity (wireless fidelity, Wi-Fi). Therefore, "wireless connection" may correspond to hot words "Wi-Fi", "wireless", "hotspot", "network", or the like. Therefore, the hot word information included in the user interface information corresponding to the user interface 300 may include "Wi-Fi", "wireless", "hotspot", and "network".

For another example, a function of a "clock" application is to view time. Therefore, "clock" may correspond to hot words "time" and " what time". Therefore, the hot word information included in the user interface information corresponding to the user interface 300 may include "time" and "what time".

In an example, the user interface information includes indication information of a control instruction.

Optionally, the control instruction may include at least one of the following: a user interface refreshing instruction, a user interface moving instruction, a page turning instruction, a selection box moving instruction, and the like.

For example, when the control instruction includes the user interface refreshing instruction, the user interface information may include at least one of information such as "refresh", "refresh the page", "refresh the interface", and "refresh the user interface".

For another example, when the control instruction includes the user interface moving instruction, the user interface information may include at least one of information such as "move left", "move right", "move up", "move down", "move", "slide", and "move the user interface".

For another example, when the control instruction includes the page turning instruction, the user interface information may include at least one of information such as "previous page", "next page", "turn the page", "turn left", and "turn right".

For another example, when the control instruction includes the selection box moving instruction, the user interface information may include at least one of information such as "next", "previous", and "move the selection box".

It can be learned that the user may indicate a same control instruction by using a plurality of different expressions. Therefore, the user interface information may include an expression that may be used by the user, and the expression may indicate a corresponding control instruction.

In an example, the user interface information further includes target corner mark information displayed on the current user interface.

For example, the target corner mark information may correspond to a target icon, a target collection, or a target control instruction.

Optionally, the user interface information further includes a correspondence between the target corner mark information and the target icon.

Optionally, the user interface information further includes a correspondence between the target corner mark information and the target collection.

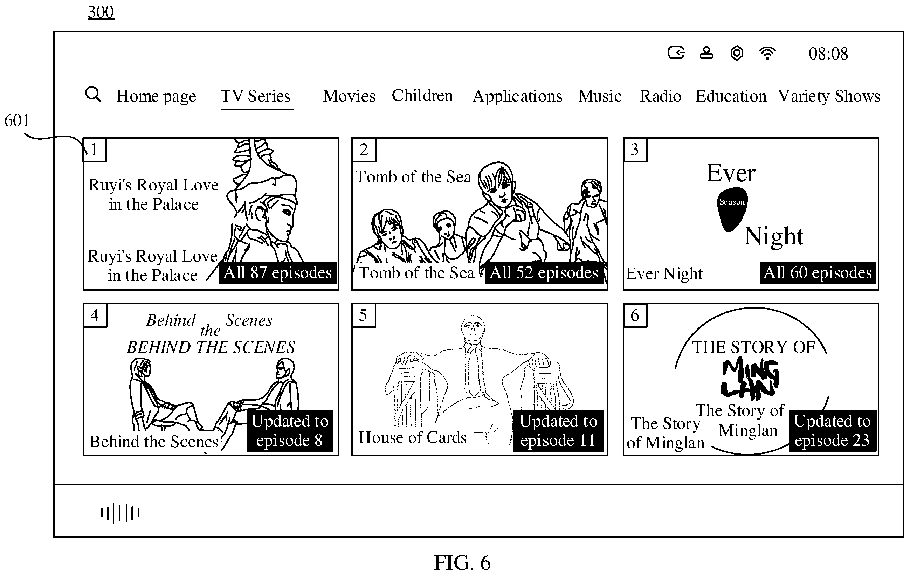

As shown in FIG. 6, the current user interface may display a plurality of corner marks 601, including a corner mark 1, a corner mark 2, a corner mark 3, a corner mark 4, a corner mark 5, and a corner mark 6. The corner mark 1 may correspond to the icon of the TV series collection "Ruyi's Royal Love in the Palace". The corner mark 2 may correspond to the icon of the TV series collection "Tomb of the Sea". The corner mark 3 may correspond to the icon of the TV series collection "Ever Night". The corner mark 4 may correspond to the icon of the TV series collection "Behind the Scenes". The corner mark 5 may correspond to the icon of the TV series collection "House of Cards". The corner mark 6 may correspond to the icon of the TV series collection "The Story of Minglan". Therefore, the user interface information may include information indicating "the corner mark 1-Ruyi's Royal Love in the Palace", information indicating "the corner mark 2-Tomb of the Sea", information indicating "the corner mark 3-Ever Night", information indicating "the corner mark 4-Behind the Scenes", information indicating "the corner mark 5-House of Cards", and information indicating "the corner mark 6-The Story of Minglan".

Optionally, the user interface information further includes a correspondence between the target corner mark information and the target control instruction.

For example, a corner mark 1 and a corner mark 2 are displayed on the current user interface. A target control instruction corresponding to the corner mark 1 is to play a video based on a resolution of 720P. A target control instruction corresponding to the corner mark 2 is to play a video based on a resolution of 1080P. Therefore, the user interface information may include information indicating "the corner mark 1-720P" and information indicating "the corner mark 2-1080P".

For another example, a corner mark 1 and a corner mark 2 are displayed on the current user interface. A target control instruction corresponding to the corner mark 1 is to play a video at a speed of 1.0x. A target control instruction corresponding to the corner mark 2 is to play a video at a speed of 2.0x. Therefore, the user interface information may include information indicating "the corner mark 1-1.0x" and information indicating "the corner mark 2-2.0x".

Optionally, obtaining the user interface information of the current user interface includes: sending first indication information to a foreground application, where the first indication information is used to indicate the foreground application to feed back the user interface information; and receiving the user interface information sent by the foreground application, where the user interface information is obtained by the foreground by retrieving information related to the current user interface.

The foreground application may be, for example, a video playing application, an audio playing application, a desktop application, a setting application, a live TV application, or a radio application.

For example, after detecting the voice instruction of the user, the voice assistant of the client device may send the first indication information to the foreground application of the client device by invoking a software interface of the foreground application, and the first indication information may indicate the foreground application to feed back the user interface information. The foreground application may send the user interface information to the voice assistant based on the first indication information through the software interface.

A manner in which the foreground application determines the user interface information may be scanning an element on the current user interface. The element may include an icon, collection information corresponding to the icon, a control instruction corresponding to the current user interface, or the like.

A manner in which the foreground application determines the user interface information may further include obtaining, from a network device (for example, a cloud server), data related to the element on the current user interface. For example, hot words related to "Ruyi's Royal Love in the Palace" are obtained, including "Ruyi".

A manner in which the foreground application determines the user interface information may be: searching for a document used to display the current user interface, to obtain the user interface information. The document may include, for example, a hypertext markup language (hypertext markup language, HTML) file, an extensible markup language (extensible markup language, XML) file, and a script file.

Optionally, the user interface information further includes an identifier of the foreground application.

To be specific, based on the user interface information, the voice assistant may learn that the current user interface is provided by the foreground application and that the user interface information is provided by the foreground application.

It is assumed that the current user interface is updated. For example, an icon of a TV series is added to the current user interface. The voice assistant may obtain the user interface information by using the foreground application, and the foreground application already knows an element on the updated user interface when displaying the updated user interface. Therefore, update of the current user interface does not affect voice recognition efficiency of the voice assistant.

The following Table 1 provides code for the voice assistant to obtain the user interface information from the foreground application. Specifically, the user interface information may include the hot word information, the indication information of the control instruction, and a maximum corner mark value.

**Table 1**

| Invoking manner | Messager | |
|---|---|---|
| Invoking interface | //Session ID; mandatory; String | Data format in Bundle |
| | "sessionld":"" | |
| | "callParams": { | |
| | //Instruction name; mandatory; String | |
| | "command" :"getVisibleInfo" | |
| | } | |
| Return value | //Session ID, a session ID in a transparent transmission request message; mandatory; String | |
| | "sessionld":"" | |
| | //Result code, success-0, failure-1 (when the interface does not support | |
| | "visible is available", 1 is returned); mandatory; int | |
| | "errorCode":0 | |
| | //Result information; optional; JsonObject | |
| | "result":{ | |
| | //Used in a scenario in which when a name of a received instruction package is inconsistent with that of the foreground application (for example, HiBoard and Launcher), optional field; String | |
| | "responsePackageName":" | |
| | com.huawei.homevision.tvcommandserver" | |
| | //Used only for the hot word information, where optionally, hot words in the front are preferentially matched; and mandatory when hot words are supported; optional; JsonArray | |
| | //Control instruction supported by the interface; optional; | |
| | JsonArray | |
| | "supportIntent":[ | |
| | ... | |
| | ], | |
| | //Used only for the maximum corner mark value, and mandatory when corner marks are supported; optional; int | |
| | "markMaxValue":N | |
| | } | |

Optionally, before the voice instruction of the user is obtained, the method further includes: displaying a corner mark on the current user interface.

For example, the user interface information includes the target corner mark information, and before the voice assistant obtains the voice instruction of the user, the method further includes: The voice assistant sends second indication information to the foreground application, where the second indication information is used to indicate the foreground application to display the corner mark on the current user interface. To be specific, after the user says a wake-up word to wake up the voice assistant, the voice assistant may send the second indication information to the foreground application, so that the foreground application may display the corner mark on the currently displayed interface. Then, the user may observe the displayed user interface with the corner mark and say a voice including corner mark information. The user interface information fed back by the foreground application to the voice assistant may include the corner mark information.

Optionally, after the voice instruction of the user is obtained, the method further includes: removing the corner mark on the current user interface.

After the voice assistant obtains the voice instruction, the foreground application may remove the corner mark on the current user interface. For example, after the foreground application feeds back the user interface information to the voice assistant, the foreground application may remove the corner mark on the user interface. The user interface without the corner mark may have a relatively concise display effect.

503: The client device sends the user interface information and the voice instruction to a server.

Correspondingly, the server receives the user interface information and the voice instruction that are sent by the client device.

Optionally, step 503 may be completed by the voice assistant on the client device.

The client device may not have a voice recognition capability. To be specific, the client device may not have a capability of converting a voice instruction of the user into a device control instruction corresponding to the voice instruction. The client device may send the voice instruction of the user to the server, and the server performs a voice recognition operation. In addition, the server may perform the voice recognition operation based on the user interface currently displayed by the client device. Therefore, the client device may send, to the server, user interface indication information used to indicate the currently displayed user interface.

504: The server determines the target instruction based on the user interface information and the voice instruction of the user, where the target instruction is used to instruct the client device to perform the target operation.

In an example, the voice instruction is "play episode 30 of Ruyi's Royal Love in the Palace", and the user interface information includes "Ruyi's Royal Love in the Palace". The server may determine, based on "play" in the voice instruction, that a type of the target operation is playing audio and video, and match "Ruyi's Royal Love in the Palace" in the voice instruction with "Ruyi's Royal Love in the Palace" in the user interface information, so that the server may determine the target instruction, and the target operation corresponding to the target instruction is to play the 30^{th} episode video resource in the TV series collection "Ruyi's Royal Love in the Palace".

In an example, the voice instruction is "display a movie page", and the user interface information includes "movie". The server may determine, based on "display" in the voice instruction, that a type of the target operation is displaying a specific user interface, and match "movie" in the voice instruction with "movie" in the user interface information, so that the server may determine the target instruction, and the target operation corresponding to the target instruction is to display a user interface corresponding to a movie collection.

In an example, the voice instruction is "enable Wi-Fi", and the user interface information includes "Wi-Fi". The server may determine, based on "enable" in the voice instruction, that a type of the target operation is enabling a specific function, and match "Wi-Fi" in the voice instruction with "Wi-Fi" in the user interface information, so that the server may determine the target instruction, and the target operation corresponding to the target instruction is to start the wireless connection module of the client device.

In an example, the voice instruction is "the third", and the user interface information includes "the corner mark 3-Ever Night". The server may determine, based on the voice instruction, that a type of the target operation is tapping, and match "3" in the voice instruction with "the corner mark 3-Ever Night" in the user interface information, so that the server may determine the target instruction, and the target operation corresponding to the target instruction is to tap the icon of the TV series collection "Ever Night".

In an example, the voice instruction is "next page", and the user interface information includes "next page". The server may determine, based on the voice instruction, that a type of the target operation is a page turning operation, and match "next page" in the voice instruction with "next page" in the user interface information, so that the server may determine the target instruction, and the target operation corresponding to the target instruction is to display a next page of the user interface.

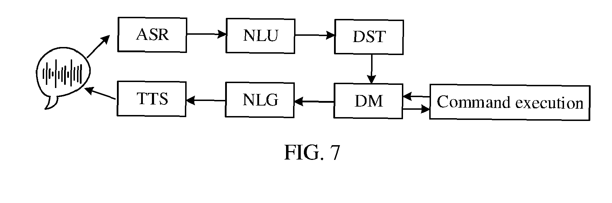

For example, the server may implement the voice recognition operation by using an automatic speech recognition (automatic speech recognition, ASR) module and a natural language understanding (natural language understanding, NLU) module. Optionally, the server or the client device may further include a dialog state tracking (dialog state tracking, DST) module, a dialog management (dialog management, DM) module, a natural language generation (natural language generation, NLG) module, a text to speech (text to speech, TTS) module, and the like, to implement the voice recognition operation. The following describes functions of the modules by using FIG. 7. 701 in FIG. 7 may represent a voice instruction.

### (1) ASR module

A main function of the ASR module is to recognize a voice of the user as text content. The ASR module may process a segment of voice based on the user interface information and the voice instruction of the user, to convert the segment of voice into a corresponding text. For example, a part of the voice instruction may correspond to an icon name included in the user interface information. Due to development of machine learning capabilities in recent years, recognition accuracy of the ASR speech recognition module is greatly improved. This makes voice interaction between human and machine possible. Therefore, ASR is the real starting point of voice interaction. Although the ASR module can learn what the user says, the ASR module cannot understand a meaning of the user. Semantic understanding is handled by the NLU module.

### (2) NLU module

A main function of the NLU module is to understand a user intent (intent) and parse a slot (slot). The NLU module may determine an intent and a slot of the voice instruction based on the user interface information. For example, the text obtained by the ASR module may correspond to the icon name included in the user interface information.

For example, the currently displayed user interface is shown in FIG. 3. The user expresses: Play episode 30 of Ruyi's Royal Love in the Palace.

Because the currently displayed user interface includes the icon of the TV series collection "Ruyi's Royal Love in the Palace", the NLU module may obtain content shown in Table 2 through parsing.

**Table 2**

| Intent (intent) | "Play" |
|---|---|
| Slot (slot) | Video name = "Ruyi's Royal Love in the Palace" |
| | Episode = "30" |

Therefore, the NLU module may convert the voice instruction "play episode 30 of Ruyi's Royal Love in the Palace" into a corresponding target instruction.

In the foregoing example, two concepts are mentioned: the intent and the slot. The following describes the two concepts in detail.

### Intent

The intent may be understood as a classifier, to determine a type of a sentence expressed by the user. Then, a program corresponding to the type performs special parsing. In an implementation, the "program corresponding to the type" may be a robot (Bot). For example, the user says: "Play me a comedy movie." The NLU module determines that an intent classification of the user is a movie, and therefore summons a movie robot (Bot) to recommend a movie to the user for playing. When the user hears and feels wrong, the user says: "Change another one." The movie robot continues to serve the user until the user expresses another question and the intent is not a movie. Then, another robot is switched to serve the user.

### Slot

After the intent of the user is determined, the NLU module needs to further understand content in the dialog. For simplicity, a core part may be selected for understanding, and another part may be ignored. The most important part may be referred to as a slot (Slot).

Two core slots are defined in the example of "play episode 30 of Ruyi's Royal Love in the Palace": a "video name" and an "episode". If content that the user needs to input during video playing needs to be comprehensively considered, certainly more content may be thought of, such as a playing start point, a playing speed, and a playing resolution. For a voice interaction designer, the starting point is to define a slot.

The following provides several types of code for determining the target instruction.

### Example 1

```
          //Open an xxx instruction format
           "callParams": {
          //Invoked instruction name; mandatory; String
           "command":"open",
          //The voice assistant recognizes the identifier
```

```
 of the foreground application; optional; String
           "foregroundPackageName":" com.huawei.homevision.launcher"
          //Instruction parameter; mandatory; JsonObject
           "params":{
                //Open an icon name; mandatory; String
                       "name": "name",
               }" }
```

### Example 2

```
          //Open an instruction format
           "callParams": {
          //Invoked instruction name; mandatory; String
           "command": "select",
          //The voice assistant recognizes the identifier of
```

```
 the foreground application; optional; String
           "foregroundPackageName":" com.huawei.homevision.launcher"
          //Instruction parameter; mandatory; JsonObject
           "params": {
               //Open a corner mark identifier; mandatory; String
                    "index": "N",
           } }"
```

### Example 3

```
          //Control instruction format
           "callParams": {
          //Invoked instruction name; mandatory; String
           "command": "directive",
          //The voice assistant recognizes the identifier of 
```

```
the foreground application; optional; String
           "foregroundPackageName":" com.huawei.homevision.launcher"
          //Instruction parameter; mandatory; JsonObject
           "params": {
                   //Control instruction name; mandatory; String
           }" "name": "sys.nextpage",
           }
```

### (3) DST module and DM module

A main function of the DST module is to check and combine slots. A main function of the DM module is to perform sequential slot filling, clarification, and disambiguation.

For example, the user expresses "play Ruyi's Royal Love in the Palace". In this case, the NLU module may determine that the intent of the user is "play", and slot information related to the intent is the "video name" and the "episode". However, the statement expressed by the user includes only the slot information "video name". In this case, the DST module determines that the slot information "episode" is missing, and the DST module may send the missing slot information to the DM module. The DM module controls the NLG module to generate a dialog for querying the user for the missing slot information.

For example, the user: I want to watch a video;
BOT: What's the name of the video, please?
the user: Ruyi's Royal Love in the Palace;
BOT: Which episode do you want to play from?

After the user completes all the slot information in the intent "play", the DM module may first perform slot filling on the slot information in a preset sequence. For example, a slot filling sequence may be the "video name" and the "episode", and slot information corresponding to the slots is "Ruyi's Royal Love in the Palace" and "episode 30" respectively.

After the slot filling is completed, the DM module may control a command execution module to perform the "play" operation. For example, the command execution module may open a TV series application, and start playing from the episode 30 of Ruyi's Royal Love in the Palace.

It should be understood that, in different dialog systems, names and designs of modules of a dialog manager are different. Herein, the DST module and the DM module may be uniformly considered as a whole, and are configured to control and manage a dialog status. For example, if the user expresses a need for "play" but does not specify any information, the dialog system needs to ask the user for slot information that needs to be obtained.

### (4) Natural language generation NLG module

A main function of the NLG module is to generate a dialog.

For example, when determining that the slot information "episode" is missing, the DM module may control the NLG module to generate a corresponding dialog "which episode do you want to play from?".

For example, after completing the "play" operation, the command execution module may notify the DM module that the operation is completed. In this case, the DM module may control the NLG module to generate a corresponding dialog "now play episode 30 of Ruyi's Royal Love in the Palace for you...".

### (5) TTS module

A main function of the TTS module is to broadcast a dialog to the user.

TTS is a voice synthesis broadcast technology. A main goal of TTS is to handle a "phonological" problem of broadcasting well. This needs to determine and uniformly consider information such as a symbol, a polyphone, and a sentence pattern, and handle pronunciation of words in broadcasting. In addition, to adapt to different people's hobbies, "timbre" also requires attention. In general, TTS is to handle "phonology" and "timbre" well.

To improve TTS broadcast quality, live people are invited to record a standard template part, so that an entire conversation system sounds more natural.

505: The server sends the target instruction to the client device.

Correspondingly, the client device receives the target instruction sent by the server. Optionally, the voice assistant on the client device may receive the target instruction sent by the server.

In other words, the server feeds back a recognition result of the voice instruction to the client device.

Optionally, step 506 is further included. The client device determines and performs the target operation based on the target instruction.

In other words, the client device may determine, based on the target instruction sent by the server, the target operation indicated by the target instruction, and perform the target operation, to respond to the voice instruction sent by the user.

Optionally, the target instruction includes the identifier of the foreground application.

For example, the foreground application sends user interface information including the identifier of the foreground application to the voice assistant, and the voice assistant then sends the user interface information to the server. The server determines the target instruction based on the user interface information and the voice instruction, and the target instruction may carry the identifier of the foreground application. Therefore, the voice assistant may invoke the software interface of the foreground application based on the identifier of the foreground application sent by the server, and send the target instruction to the foreground application. The foreground application may perform the target operation based on the target instruction.

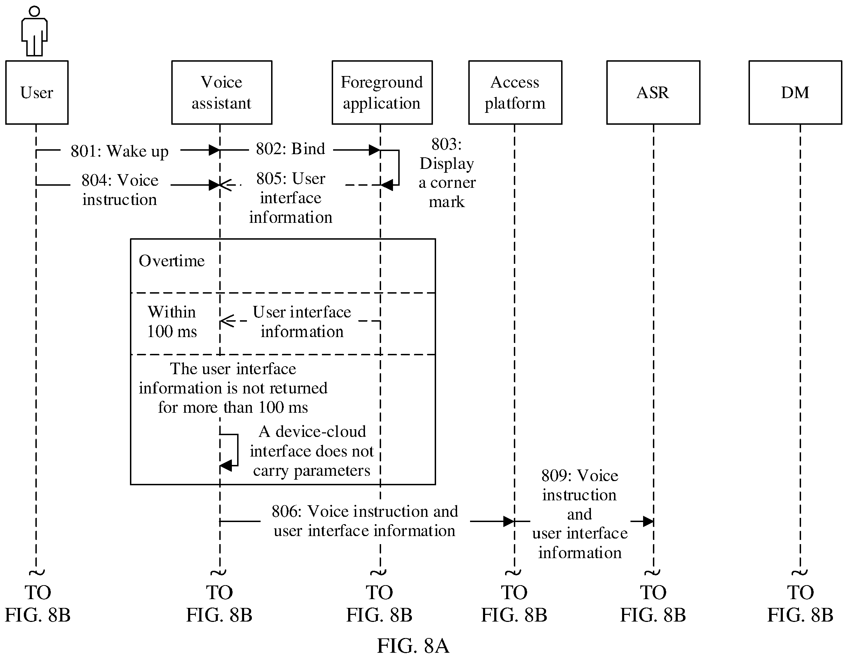

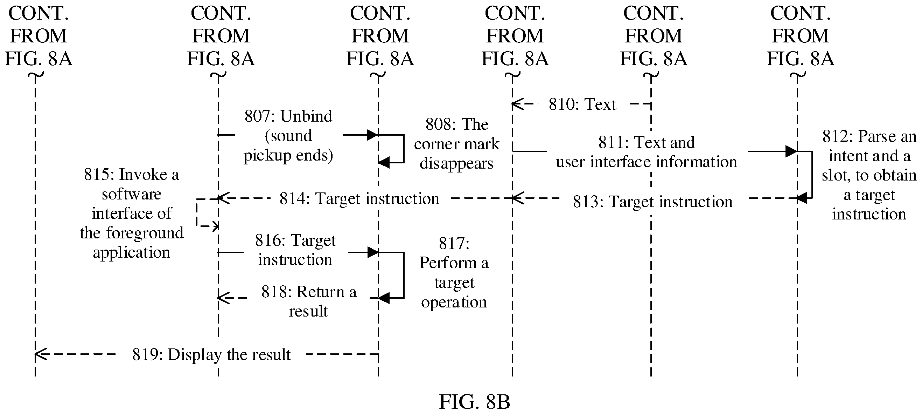

The following describes in detail the method for controlling a device using a voice provided in this application by using an example shown in FIG. 8A and FIG. 8B.

801: A user says a wake-up word to wake up a voice assistant.

The voice assistant may be, for example, a voice assistant of a client device.

802: The voice assistant establishes a binding relationship between the voice assistant and a foreground application.

The foreground application may be, for example, a foreground application of the client device.

For example, the voice assistant may invoke a software interface of the foreground application, to establish the binding relationship between the voice assistant and the foreground application.

803: The foreground application displays a corner mark.

To be specific, the client device may display one or more corner marks on a currently displayed user interface. The currently displayed user interface may be a current user interface.

804: The user says a voice instruction.

Correspondingly, the voice assistant obtains the voice instruction of the user.

For a specific implementation of step 804, refer to step 501 in the embodiment shown in FIG. 5. Details are not described herein again.

805: The foreground application sends user interface information of the current user interface to the voice assistant.

Correspondingly, the voice assistant receives the user interface information sent by the foreground application.

For a specific implementation of step 805, refer to step 502 in the embodiment shown in FIG. 5. Details are not described herein again.

For example, as shown in FIG. 8A and FIG. 8B, within a period of time after the voice assistant is bound to the foreground application, the foreground application may send the user interface information to the voice assistant. If the period of time does not exceed a preset threshold (for example, 100 ms), the voice assistant may send the user interface information to an access platform of a cloud server. If the voice assistant does not receive the user interface information within a long period of time after the voice assistant is bound to the foreground application, an interface between the client and the cloud server does not carry parameters.

806: The voice assistant sends the voice instruction and the user interface information to the access platform of the server.

Correspondingly, the access platform of the server receives the voice instruction and the user interface information that are sent by the voice assistant.

For a specific implementation of step 806, refer to step 503 in the embodiment shown in FIG. 5. Details are not described herein again.

807: The voice assistant unbinds the binding relationship between the voice assistant and the foreground application.

For example, the voice assistant may cancel invoking the software interface of the foreground application.

808: The foreground application removes the corner mark on the current user interface.

809: The access platform may send, to an ASR module of the server, the voice instruction and the user interface information that are sent by the voice assistant.

Correspondingly, the ASR module may receive the voice instruction and the user interface information that are sent by the access platform.

810: The ASR module may convert the voice instruction into a text based on the user interface information, and send the text to the access platform.

Correspondingly, the access platform receives the text sent by the ASR module.

811: The access platform may send, to a DM module of the server, the user interface information sent by the voice assistant and the text sent by the ASR module.

Correspondingly, the DM module receives the text and the user interface information.

812: The DM module parses an intention and a slot on the text based on the user interface information, to obtain the target instruction corresponding to the voice instruction.

813: The DM module sends the target instruction to the access platform.

Correspondingly, the access platform receives the target instruction sent by the DM module.

For specific implementations of steps 809 to 813, refer to step 504 in the embodiment shown in FIG. 5. Details are not described herein.

814: The access platform sends the target instruction to the voice assistant.

Correspondingly, the voice assistant receives the target instruction sent by the access platform.

For a specific implementation of step 814, refer to step 505 in the embodiment shown in FIG. 5. Details are not described herein again.

815: The voice assistant invokes the software interface of the foreground application.

816: The voice assistant sends the target instruction to the foreground application.

Correspondingly, the foreground application receives the target instruction sent by the voice assistant.

817: The foreground application executes, based on the target instruction, a target operation indicated by the voice instruction.

For specific implementations of steps 815 to 817, refer to step 506 in the embodiment shown in FIG. 5. Details are not described herein.

818: The foreground application sends a feedback result to the voice assistant.

For example, the feedback result may indicate that the foreground application successfully receives the target instruction.

819: The foreground application displays the execution result of the target operation to the user.

In other words, the user may perceive that the client device responds to the voice instruction of the user by performing the target operation.

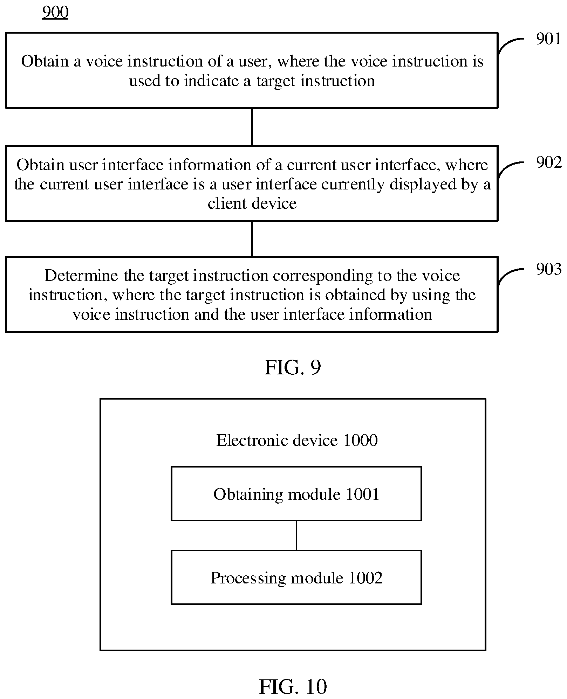

FIG. 9 is a schematic flowchart of a method for controlling a device using a voice according to an embodiment of this application.

901: Obtain a voice instruction of a user, where the voice instruction is used to indicate a target instruction.

902: Obtain user interface information of a current user interface, where the current user interface is a user interface currently displayed by a client device.

903: Determine the target instruction corresponding to the voice instruction, where the target instruction is obtained by using the voice instruction and the user interface information.

Optionally, the user interface information includes at least one of the following information: an icon name, hot word information, indication information of a control instruction, or target corner mark information of the current user interface.

Optionally, the target corner mark information corresponds to a target icon or a target control instruction.

In a possible implementation, the method 900 shown in FIG. 9 is executed by the client device.

Optionally, determining the target instruction corresponding to the voice instruction includes: The client device determines the target instruction based on the voice instruction and the user interface information.

For example, the client device may implement a voice recognition operation with reference to the user interface information by using an automatic speech recognition (automatic speech recognition, ASR) module, a natural language understanding (natural language understanding, NLU) module.

In this case, for specific implementations of steps 901 and 902, refer to steps 501 and 502 in the embodiment shown in FIG. 5. For a specific implementation of step 903, refer to step 504 in the embodiment shown in FIG. 5. Details are not described herein.

In a possible implementation, the method 900 shown in FIG. 9 is executed by the client device.

Optionally, before determining the target instruction corresponding to the voice instruction, the method further includes: sending the user interface information and the voice instruction to a server. The determining the target instruction corresponding to the voice instruction includes: receiving the target instruction sent by the server, where the target instruction is determined by the server based on the user interface information and the voice instruction of the user.

In this case, for specific implementations of steps 901 and 902, refer to steps 501 and 502 in the embodiment shown in FIG. 5. For a specific implementation of step 903, refer to steps 503 to 505 in the embodiment shown in FIG. 5. Details are not described herein.

In a possible implementation, the method 900 shown in FIG. 9 is executed by a server.

Optionally, obtaining the voice instruction of the user includes: receiving the voice instruction sent by the client device; obtaining the user interface information of the current user interface includes: receiving the user interface information sent by the client device; and determining the target instruction corresponding to the voice instruction includes: determining the target instruction based on the voice instruction and the user interface information.

Optionally, the method further includes: sending the target instruction to the client device.

In this case, for specific implementations of steps 901 and 902, refer to step 503 in the embodiment shown in FIG. 5. For a specific implementation of step 903, refer to step 4 in the embodiment shown in FIG. 5. Details are not described herein.

It may be understood that, to implement the foregoing functions, the electronic device includes corresponding hardware and/or software modules for performing the functions. With reference to algorithm steps of each example described in the embodiments disclosed in this specification, this application may be implemented in a form of hardware or a combination of hardware and computer software. Whether a function is performed by hardware or hardware driven by computer software depends on particular applications and design constraint conditions of the technical solutions. A person skilled in the art may use different methods to implement the described functions for each particular application with reference to the embodiments, but it should not be considered that the implementation goes beyond the scope of this application.

In the embodiments, the electronic device may be divided into function modules based on the foregoing method examples. For example, each function module corresponding to each function may be obtained through division, or two or more functions may be integrated into one processing module. The integrated module may be implemented in a form of hardware. It should be noted that the module division in the embodiments is an example, and is merely logical function division. In an actual implementation, another division manner may be used.

When each function module is obtained through division for each function, FIG. 10 is a possible schematic composition diagram of an electronic device 1000 in the foregoing embodiments. As shown in FIG. 10, the electronic device 1000 may include an obtaining module 1001 and a processing module 1002. The electronic device 1000 may be, for example, the client device or the server described above.

The obtaining module 1001 may be configured to obtain a voice instruction of a user, where the voice instruction is used to indicate a target instruction.

For example, the voice assistant in FIG. 2 may be configured to implement a function of the obtaining unit 1001.

The obtaining module 1001 may further be configured to obtain user interface information of a current user interface, where the current user interface is a user interface currently displayed by the client device.

For example, the voice assistant in FIG. 2 may be configured to implement a function of the obtaining unit 1001.

The processing module 1002 is configured to determine the target instruction corresponding to the voice instruction, where the target instruction is obtained by using the voice instruction and the user interface information.

It should be noted that all related content of the steps in the foregoing method embodiments may be cited in function description of corresponding function modules. Details are not described herein again.

The electronic device provided in this embodiment is configured to perform the method for controlling a device using a voice. Therefore, an effect the same as the effect of the foregoing implementation methods can be achieved.

When an integrated unit is used, the electronic device may include a processing module, a storage module, and a communications module. The processing module may be configured to control and manage actions of the electronic device, for example, may be configured to support the electronic device to perform the steps performed by the foregoing units. The storage module may be configured to support the electronic device to store program code, data, and the like. The communications module may be configured to support communication between the electronic device and another device.

The processing module may be a processor or a controller. The processing module may implement or execute various example logical blocks, modules and circuits described with reference to content disclosed in this application. Alternatively, the processor may be a combination of processors implementing a computing function, for example, a combination of one or more microprocessors, or a combination of a digital signal processor (digital signal processor, DSP) and a microprocessor. The storage module may be a memory. The communications module may be specifically a device that interacts with another electronic device, such as a radio frequency circuit, a Bluetooth chip, or a Wi-Fi chip.

In an embodiment, when the processing module is a processor and the storage module is a memory, the electronic device in this embodiment may be a device in the structure shown in FIG. 1.

An embodiment further provides a computer program product. When the computer program product runs on a computer, the computer is enabled to perform the foregoing related steps, to implement the method for controlling a device using a voice in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the method for controlling a device using a voice in the foregoing method embodiments.

An embodiment of this application provides a terminal device. The terminal device has a function of implementing the actions of the terminal device in any one of the foregoing method embodiments. The function may be implemented by hardware, or may be implemented by hardware executing corresponding software. The hardware or the software includes one or more modules corresponding to sub-functions in the function. Specifically, the terminal device may be user equipment.

An embodiment of this application further provides a communications system, and the system includes the network device (for example, a cloud server) and the terminal device that are described in any one of the foregoing embodiments.

An embodiment of this application further provides a communications system, and the system includes the electronic device and the server that are described in any one of the foregoing embodiments.

An embodiment of this application further provides a computer-readable storage medium, and the computer-readable storage medium stores a computer program. When the computer program is executed by a computer, a method procedure related to the terminal device in any one of the foregoing method embodiments is implemented. Specifically, the computer may be the foregoing terminal device.

An embodiment of this application further provides a computer program or a computer program product including a computer program. When the computer program is executed on a computer, the computer is enabled to implement a method procedure related to the terminal device in any one of the foregoing method embodiments. Specifically, the computer may be the foregoing terminal device.

An embodiment of this application further provides an apparatus for use in a terminal device. The apparatus is coupled to a memory, and is configured to read and execute instructions stored in the memory, so that the terminal device is enabled to perform a method procedure related to the terminal device in any one of the foregoing method embodiments. The memory may be integrated into a processor, or may be independent of a processor. The apparatus may be a chip (for example, a system on a chip (system on a chip, SoC)) on the terminal device.

It should be understood that, the processor in the embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory in the embodiments of this application may be a volatile memory, or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

It should be noted that the memory described in this specification aims to include but is not limited to these memories and any memory of another proper type.

It should be further understood that first, second, and various numerical numbers in this specification are merely for differentiation for ease of description, and are not intended to limit the scope of this application.

In this application, the term "and/or" describes an association between associated objects and represents that three relationships may exist. For example, A and/or B may represent the following three cases: Only A exists, both A and B exist, and only B exists, where A and B may be singular or plural. The character "/" usually represents an "or" relationship between the associated objects.

In this application, "at least one" means one or more, and "a plurality of' means two or more. "At least one of the following items (pieces)" or a similar expression thereof indicates any combination of these items, including a single item (piece) or any combination of a plurality of items (pieces). For example, "at least one item (piece) of a, b, or c, or "at least one item (piece) of a, b, and c" may indicate: a, b, c, a-b (that is, a and b), a-c, b-c, or a-b-c, where a, b, and c may be singular or plural.

It should be understood that sequence numbers of the foregoing processes do not mean execution sequences in various embodiments of this application, and some or all of the steps may be performed in parallel or sequentially. The execution sequences of the processes should be determined by functions and internal logic of the processes, and should not be construed as any limitation on the implementation processes of the embodiments of this application.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, a terminal device, or the like) to perform all or some of the steps of the methods in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

For related parts between the method embodiments of this application, mutual reference may be made. The apparatus provided in each apparatus embodiment is configured to perform the method provided in the corresponding method embodiment. Therefore, each apparatus embodiment may be understood with reference to a related part in a related method embodiment.

The apparatus structure diagrams provided in the apparatus embodiments of this application show only simplified designs of corresponding apparatuses. In actual application, the apparatus may include any quantity of transmitters, receivers, processors, memories, or the like, to implement functions or operations performed by the apparatus in the apparatus embodiments of this application. All apparatuses that can implement this application fall within the protection scope of this application.

Names of messages/frames/indication information, modules, units, or the like provided in the embodiments of this application are merely examples, and other names may be used provided that the messages/frames/indication information, modules, units, or the like have same functions.

The terms used in the embodiments of this application are merely for the purpose of illustrating specific embodiments, and are not intended to limit this application. The terms "a", "said" and "the" of singular forms used in the embodiments and the appended claims of this application are also intended to include plural forms, unless otherwise specified in the context clearly. It should be further understood that, the term "and/or" used herein indicates and includes any or all possible combinations of one or more associated listed items. The character "/" in this specification usually indicates an "or" relationship between associated objects.

It should be understood that although terms "first", "second", "third", and the like may be used in the embodiments of this application to describe various messages, requests, and terminals, the messages, requests, and terminals are not limited by the terms. These terms are used only to distinguish between the messages, the requests, and the terminals. For example, without departing from the scope of the embodiments of this application, a first terminal may alternatively be referred to as a second terminal, and similarly, a second terminal may alternatively be referred to as a first terminal.

Depending on the context, for example, words "if' used herein may be explained as "while" or "when" or "in response to determining" or "in response to detection". Similarly, depending on the context, phrases "if determining" or "if detecting (a stated condition or event)" may be explained as "when determining" or "in response to determining" or "when detecting (the stated condition or event)" or "in response to detecting (the stated condition or event)".

Persons of ordinary skill in the art should understand that all or some of the steps of the method specified in any foregoing embodiment may be implemented by a program instructing related hardware. The program may be stored in a readable storage medium, in a device, such as a FLASH, or an EEPROM. When the program runs, the program executes all or part of the steps described above.

In the foregoing specific implementations, the objectives, the technical solutions, and the beneficial effects of this application are further described in detail. It should be understood that different embodiments can be combined. The foregoing descriptions are merely specific implementations of this application, but are not intended to limit the protection scope of this application. Any combination, modification, equivalent replacement, or improvement made without departing from the spirit and principle of this application should fall within the protection scope of this application.

## Claims

1. A method for controlling a device using a voice, comprising:
obtaining a voice instruction of a user, wherein the voice instruction is used to indicate a target instruction;
obtaining user interface information of a current user interface, wherein the current user interface is a user interface currently displayed by a client device; and
determining the target instruction corresponding to the voice instruction, wherein the target instruction is obtained by using the voice instruction and the user interface information.

2. The method according to claim 1, wherein the user interface information comprises at least one of the following information: an icon name, hot word information, indication information of a control instruction, or target corner mark information of the current user interface.

3. The method according to claim 2, wherein the target corner mark information corresponds to a target icon or a target control instruction.

4. The method according to any one of claims 1 to 3, wherein before the determining the target instruction corresponding to the voice instruction, the method further comprises:
sending the user interface information and the voice instruction to a server; and
the determining the target instruction corresponding to the voice instruction comprises:
receiving the target instruction sent by the server, wherein the target instruction is determined by the server based on the user interface information and the voice instruction of the user.

5. The method according to any one of claims 1 to 3, wherein the determining the target instruction corresponding to the voice instruction comprises:
determining, by the client device, the target instruction based on the voice instruction and the user interface information.

6. The method according to claim 4 or 5, wherein before the obtaining user interface information of a current user interface, the method further comprises:
sending first indication information to a foreground application, wherein the first indication information is used to indicate the foreground application to feed back the user interface information; and
the obtaining user interface information of a current user interface comprises:
receiving the user interface information sent by the foreground application, wherein the user interface information is obtained by the foreground application by retrieving information related to the current user interface.

7. The method according to any one of claims 4 to 6, wherein the user interface information comprises the target corner mark information, and before the obtaining a voice instruction of a user, the method further comprises:
displaying a corner mark on the current user interface; and
after the obtaining a voice instruction of a user, the method further comprises:
removing the corner mark on the current user interface.

8. The method according to claim 6, wherein the user interface information further comprises an identifier of the foreground application.

9. The method according to claim 8, wherein the target instruction further comprises the identifier of the foreground application.

10. The method according to any one of claims 1 to 3, wherein the obtaining a voice instruction of a user comprises:
receiving the voice instruction sent by the client device;
the obtaining user interface information of a current user interface comprises:
receiving the user interface information sent by the client device; and
the determining the target instruction corresponding to the voice instruction comprises:
determining the target instruction based on the voice instruction and the user interface information.

11. The method according to claim 10, wherein the method further comprises:
sending the target instruction to the client device.

12. An electronic device, comprising:
an obtaining module, configured to obtain a voice instruction of a user, wherein the voice instruction is used to indicate a target instruction, wherein
the obtaining module is further configured to obtain user interface information of a current user interface, wherein the current user interface is a user interface currently displayed by a client device; and
a processing module, configured to determine the target instruction corresponding to the voice instruction, where the target instruction is obtained by using the voice instruction and the user interface information.

13. The electronic device according to claim 12, wherein the user interface information comprises at least one of the following information: an icon name, hot word information, indication information of a control instruction, or target corner mark information of the current user interface.

14. The electronic device according to claim 13, wherein the target corner mark information corresponds to a target icon or a target control instruction.

15. The electronic device according to any one of claims 12 to 14, wherein the electronic device is the client device, and the client device further comprises:
a transceiver module, configured to: before the processing module determines the target instruction corresponding to the voice instruction, send the user interface information and the voice instruction to a server, wherein
the processing module is specifically configured to receive the target instruction sent by the server, wherein the target instruction is determined by the server based on the user interface information and the voice instruction of the user.

16. The electronic device according to any one of claims 12 to 14, wherein the electronic device is the client device; and
the processing module is specifically configured to determine the target instruction based on the voice instruction and the user interface information.

17. The electronic device according to claim 15 or 16, wherein the electronic device further comprises:
a sending module, configured to: before the obtaining module obtains the user interface information of the current user interface, send first indication information to a foreground application, wherein the first indication information is used to indicate the foreground application to feed back the user interface information, wherein
the obtaining module is specifically configured to receive the user interface information sent by the foreground application, wherein the user interface information is obtained by the foreground application by retrieving information related to the current user interface.

18. The electronic device according to any one of claims 15 to 17, wherein the user interface information comprises the target corner mark information;
the processing module is further configured to: before the obtaining module obtains the voice instruction of the user, display a corner mark on the current user interface; and
the processing module is further configured to: after the obtaining module obtains the voice instruction of the user, remove the corner mark on the current user interface.

19. The electronic device according to claim 17, wherein the user interface information further comprises an identifier of the foreground application.

20. The electronic device according to claim 19, wherein the target instruction further comprises the identifier of the foreground application.

21. The electronic device according to any one of claims 12 to 14, wherein the electronic device is the server;
the obtaining module is specifically configured to receive the voice instruction sent by the client device;
the obtaining module is specifically configured to receive the user interface information sent by the client device; and
the processing module is specifically configured to determine the target instruction based on the voice instruction and the user interface information.

22. The electronic device according to claim 21, wherein the server further comprises:
a transceiver module, configured to send the target instruction to the client device.

23. A computer-readable storage medium, wherein the computer-readable medium stores program code to be executed by a device, and the program code is used to perform the method according to any one of claims 1 to 11.

24. A chip, wherein the chip comprises a processor and a data interface, and the processor reads, through the data interface, instructions stored in a memory, to perform the method according to any one of claims 1 to 11.
